# EUROPEAN PATENT SPECIFICATION

(11) **EP 1 300 532 B1**
(45) Date of publication and mention of the grant of the patent: **10.08.2005**
(21) Application number: 01123730.2
(22) Date of filing: 04.10.2001
(51) Int. Cl.: E05B 47/00, E05B 65/32

(54) **Latch assembly**
Verriegelungsvorrichtung
Dispositif de verrouillage

(43) Date of publication of application: 09.04.2003
(73) Proprietor: Ford Global Technologies, LLC, Dearborn, MI 48126 (US)
(72) Inventor: Gustavsson, Daniel Carl Ingemar, 413 09 Göteborg (SE); Asbogard, Mattias, 524 92 Herrljunga (SE)
(74) Representative: Lindberg, Klas Valter Bo

(56) References cited:
- EP-A- 0 989 269
- EP-A- 1 048 808
- EP-A- 1 245 762
- EP-A- 1 279 784
- DE-A- 3 820 877
- GB-A- 808 989
- US-A- 3 664 698
- US-A- 6 042 160

## Description

### Field of the Invention

The invention relates to a latch assembly for latching and unlatching a vehicle door.

### Technical Background

Vehicle door latch systems are well known in the art. Typically, a vehicle door will have a latch for engaging and cinching onto a striker. The vehicle door itself typically has inner and outer manually movable release handles, which are operably connected to inner and outer release levers on the latch. The connection between such release handles and a latch are often of mechanical type. Since such systems are often mechanical they tend to occupy a considerable amount of space in primarily the vehicle door. Due to various reasons, primarily safety it is desirable to provide more space in the vehicle door for other applications.

Patent Application DE 39 09 480 A1 describes a mechanical device, that is a lock latch, which has a member that is movable between two end positions using support from a so-called Memory Maneuver Element ("Memory Stellelement"). According to said application there is provided a system where a lock latch is maneuverable between two positions by support from such a "Memory Stellelement" and mechanically connected to a door handle. A lock latch including a mechanical connection according to the above-mentioned prior art solution will occupy substantial space in the vehicle door. The issue of providing more space in a vehicle door is still to be resolved for these kinds of applications.

Now, shape memory alloys has previously been proposed to work as actuators in latch assemblies. DE 38 20 877 (Hugo Kern und Liebers GmbH & Co Platinen- und Federnfabrik) discloses a latch assembly for e.g. vehicles which is intended to use shape memory alloy as actuator. According to the teachings of DE 38 20 877 the actuator could be built in to various kinds of latch assemblies without changing the design. Said latch assembly is connected to an energy source and comprises an actuator operatively coupled to a release lever, the actuator is substantially made of shape memory alloy and arranged to be powered by said energy source.

Further, the non pre-published European patent application EP01830503.7 discloses a latch assembly for latching and unlatching a vehicle door having an actuator substantially made of shape memory alloy, wherein the actuator is operatively coupled to the latch pawl.

Nevertheless there are high demands on vehicle door latch systems regarding for example durability, robustness, reliability, break in resistance, and function during extreme loading that still needs to be resolved.

Another issue with today's latch systems is that they often comprise many parts, which may result in complex construction. In powered latch systems, power actuators are utilized to lock and unlock the latch. These systems may embody electrical motors with speed reduction gears. Such powered latch systems tend to be complex and costly.

Another issue is related to the response time of the latch system, especially to electrically actuated systems. Due to safety and comfort reasons it is undesirable that the latch system has a long response time. It is thus desirable for many reasons to provide a simple construction for these kinds of systems, which provides for high reliability.

### Summary of the Invention

The object of the present invention is to provide a latch assembly that overcomes the above issues, yet is simple and safe while requiring only limited space.

A further object of the present invention is to provide a latch assembly with a rapid response time.

Furthermore it is desirable to provide a latch assembly with high standards regarding durability, robustness, reliability, break in resistance and functionality during extreme loading.

These and other objects are achieved by the latch assembly according to Claim 1. Preferred embodiments of the invention are defined in the following dependent claims.

According to the invention there is provided a latch assembly for latching and unlatching a vehicle door. Said latch assembly is connected to an energy source and comprises, a claw pivotally mounted around a claw shaft or axle connected to said assembly to allow said claw to pivot between at least an open and a closed functional condition, a pawl pivotally mounted around a pawl axle of said assembly, an actuator operatively coupled to said pawl. The claw is operatively coupled to said pawl and said actuator is substantially made of shape memory alloy (SMA) and arranged to be powered by said energy source.

This arrangement makes it possible to open a vehicle door without mechanical connection between a door handle and a lock latch. Thus in turn, this invention allows for limited space keeping in a vehicle door. The rugged design with few components makes a latch, according to the invention, both reliable and robust and also easy to manufacture and install in a vehicle.

According to the invention, the claw of said latch has substantially two legs starting from the claw axle and running in different directions from said axle with at least one end portion each, and a mouth at one of said end portions for receiving and engaging a striker, said claw being operatively coupled to said pawl at the other end portion, wherein said claw substantially describes a first lever from said pawl to said claw axle and a second lever from a part of said mouth, wherein said part of said mouth is intended to engage with said striker in a closed condition of said latch assembly, to said claw axle, said first and second lever having a length ratio of at least 3:1

A latch assembly according to the invention will experience low friction compared to prior art lock latches. Due to the extremely low friction in the assembly according to the invention it is possible to use thin actuators in a latch assembly, since the necessary force to actuate said latch will be low. By using thin actuators the latch assembly will have a quick response time when locking and unlocking the latch assembly. A further advantage of said assembly, is that the energy consumption in the latch assembly can be kept to a minimum so that less energy will be consumed by the locking system of a vehicle.

Preferably, said latch assembly including the actuator is fitted in said housing resulting in limited space keeping. In a further embodiment of the invention an energy source is provided within said housing, which makes the latch assembly easy to handle and install in for example a vehicle.

One preferred way of embodying the latch assembly is to let the actuator consist of at least one member of shape memory alloy (SMA). Said shape memory alloy member has a cross-sectional diameter of between 10µm and 5mm, preferably between 10µm and 100µm. The thin cross section and the simple construction of the shape memory alloy member actuator provides quick response time under normal conditions. The quick response time derives from a possibility of fast heating and cooling of the shape memory alloy member. It is realized that a great surface of a shape memory alloy member provides for especially a fast cooling step.

Accordingly a further preferred embodiment of said actuator of shape memory alloy (SMA) has at least one back-up member for providing additional force under extreme conditions. The back-up member has a cross-section area that is preferably between 4 and 25 times greater than a shape memory alloy member in the latch assembly in question. This arrangement provides a reliable and powerful latch that can be locked and unlocked even during extreme loading e.g. if the latch assembly has been exposed to violence.

In order to minimize the forces on the claw especially in a normal direction relative to said claw according to a further preferred embodiment of the latch assembly, an additional engaging device is provided in said housing, for receiving an additional striker, to provide support for forces in preferably the normal direction relative to a plane, in which plane said claw is pivotal. The latch assembly according to the further preferred embodiment will relieve the claw from forces working in the normal direction relative to the pivotal plane of said claw and hence the pivoting characteristics of said claw can be maintained in a safer manner. The latch assembly will present added robustness and reliability compared to prior art constructions without demanding a lot of space.

Preferably, the actuator of the latch assembly is arranged to be activated by a control unit. It is realized that the latch assembly is well adapted for being used together with a wide range of desirable locking and unlocking logic solutions. The latch assembly is then preferably fitted with a control unit comprising a receiver that will react on a signal transmitted from a key. The locking and unlocking logic is then provided at least partly in the key. It is realized that the locking and unlocking logic also can be provided at least partly in the control unit. The control unit is adapted to decide whether the actuator is being activated or not based on information transmitted by the signal. The signal is detected by the latch assembly to unlock and lock the latch. The control unit of the latch assembly is then able, when activated, to provide power from the energy source to the actuator. The latch assembly will then be operable from for exemple a latched to an unlatched condition via for example a door handle. The connection between door handle and the latch assembly can be preferably without mechanical connection and more preferably wireless.

A vehicle can be provided with at least one latch assembly according to the invention.

A latch assembly can be arranged by each vehicle door of such vehicle. A vehicle provided with the latch assembly system according to the invention will have increased space for necessary safety equipment and also present a robust, reliable and safe locking function to the vehicle. The latch assembly is flexible regarding its position by the vehicle door. The thin members of the shape memory alloy-material result in rapid response of the actuator to the applied current, which enables a reliable latching of for example a door of said vehicle.

The latch assembly is especially intended for vehicle doors but thanks to its rugged design and limited space keeping it can be suitable for other types of locks as well.

### Brief Description of the Drawings

A currently preferred embodiment of the present invention will now be described in more detail, with reference to the accompanying drawings.
Fig. 1 is a perspective view of an example of a latch assembly according to an embodiment of the invention.
Fig. 2a is a plane view of a section of a latch assembly according to an embodiment of the invention.
Fig. 2b is a plane view of a section of a latch assembly being actuated by a key according to the same embodiment of the invention.
Fig. 2c is a plane view of a section of a latch assembly undergoing further actuation according to the same embodiment of the invention.
Fig. 3 is a perspective view of an example of a vehicle appropriate for a latch assembly according to an embodiment of the invention.

### Detailed Description of Preferred Embodiments

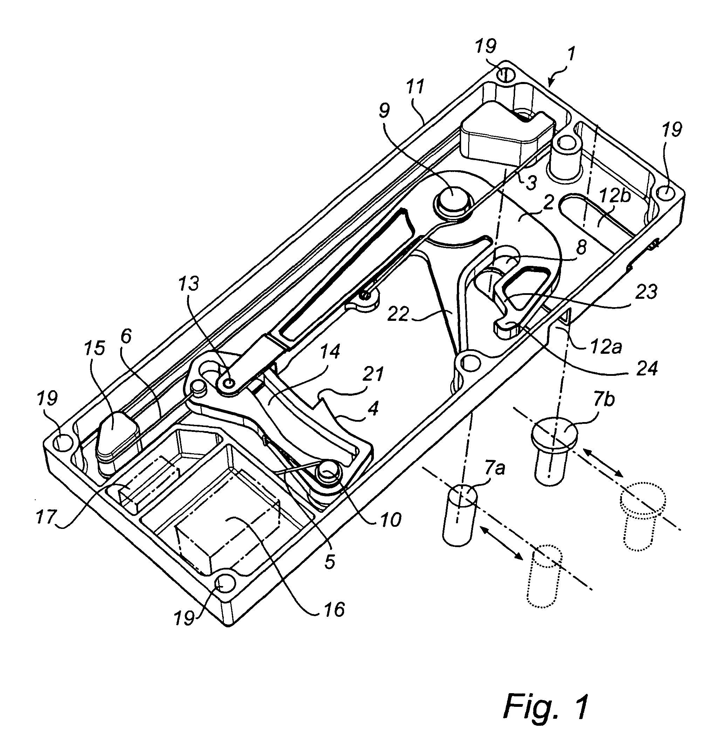

A first embodiment of the invention related to a latch assembly will be described in more detail in the following with reference to the accompanying drawings. Referring now to Fig. 1, the function of individual components forming a first embodiment of the latch assembly 1 will be described. The latch assembly 1 is fitted in a housing 11 and connected to an energy source 16. A claw 2 is pivotally mounted around a claw shaft 9 to said housing 11 to pivot between at least an open and a closed condition. The claw 2 is arranged around the claw shaft 9, from which claw shaft 9 the two legs of the claw 2 propagate with at least one end portion each. One of said end portions has a mouth 8 for receiving and engaging a striker 7a. The mouth 8 continues further into said claw surrounded on either side by a lower and an upper edge. The lower edge 22 is arranged to form a path for the striker 7a directing said striker into the fully latched position. The upper edge 23 preferably has a clutch 24 along its propagation to provide a safety position for the striker in case it is not latched properly. The mouth 8 is wide in the open end and becomes narrower further in to a section adapted to fit the striker 7a, when the latch is in a fully latched position.

The second leg of the claw 2 is at the other end portion of said claw 2, movably connected to the pawl 4 along a path 14 within said pawl 4. A bearing 13 is preferably arranged such that the pawl 4 and the end portion of the claw leg engages in order to reduce friction. The pawl path 14 has a shape that follows the rotational movement of the claw 2, reducing the force impulses between the two. The friction reducing bearing 13 is preferably arranged on the claw 2. The claw 2 is fitted to a restoring spring 3. According to the preferred embodiment the pawl 4 is also provided with a restoring spring 5.

Further, an actuator 6 is coupled to said pawl 4 and arranged to be powered by an energy source. According to the preferred embodiment a local accumulator is used as the energy source. The local energy source is preferably arranged in the void space 16 in the housing 11 of said latch assembly. It is understood by a man skilled in the art that a central energy source can be used to provide the latch assembly 1 with power. It is of course important to create a reliable power system to the latch assembly comprising a central and local energy source system working together appropriately for this invention. However, the exact manner, in which power is supplied to the latch assembly is not essential for the scope of protection for this invention. In accordance with the preferred embodiment a fully electrical latch is accomplished without need for mechanical back-up solutions.

The actuator 6 is substantially made of shape memory alloy (SMA). In the preferred embodiment the actuator 6 comprises a plurality of SMA members. Depending on the forces on the latch and the SMA member used it is understood that the diameter may be varied. For use in a vehicle door under normal conditions the thickness interval of between 10µm and 100µm for the SMA member used as actuator is appropriate. This thickness will give an appropriate response and cycle time, which is essential for this kind of applications. It is hence preferred to use additional SMA members in order to provide more force to the pawl 4 and claw 2 rather than increase the dimension of an individual SMA member. By the latch assembly, a cycle time of less than 1 second is accomplished. According to the preferred embodiment the SMA member used is a thin wire with an essentially circular cross section shape. Additionally, other shapes of the SMA member cross section are possible.

Vehicles sometimes experience significant violence resulting in extreme loading on at least parts of the vehicle. In order to control the latch in extreme conditions the latch assembly 1 has at least one back-up member for providing additional force in extreme conditions. The back-up member has a cross-sectional area that is preferably between 4 and 25 times greater than a shape memory alloy member in the latch assembly in question. The back-up member, when activated, will of course need more power to actuate the latch assembly but will also add significant force compared to normal operational conditions and hence the extreme control conditions can be fulfilled. The response time of the latch assembly 1 in extreme control condition is longer than in the normal operational conditions.

Since the response time of the latch assembly is important, it has been an object of the present invention to provide a reliable and sustainable lock with extremely low friction and efficient force transformation within the latch assembly. By using a pivotal claw 2 according to the invention a latch assembly with low internal friction can be accomplished. In order to further reduce friction and provide optimal force transformation the claw 2 in the latch assembly is designed in a specific manner. The claw 2 generally comprises two legs starting from the claw axle 9 and running in different directions from said axle 9. The first leg of the claw 2 generally describes a first lever from said pawl 4 to said claw axle 9. The second leg of the claw generally describes a second lever between the claw axle and a part of said mouth 8, wherein said part of said mouth 8 is intended to engage with said striker 7a in the closed condition of said latch assembly 1. The first and second lever have a length ratio of at least 3:1. More preferably, the first and second lever have a length ratio of between 3:1 and 20:1. The most suitable length ratio of the first and the second lever is around 10:1. By making a claw with these proportions a latch assembly with necessary force for operating the claw around the striker is accomplished. Further, the force from the actuator 6 working on the pawl 4 can be kept to a minimum allowing the use of thin members of SMA working as actuators, which in turn will result in rapid response time in normal operation condition.

There are at least two factors making SMA members appropriate for use as actuators. They undergo a phase deformation, changing the crystalline structure of the material, from the Martensite phase to the Austenite phase in a relatively low temperature range. An SMA member can "remember" its previous shape after having been plastically deformed. If a sample, being in its low temperature phase (Martensite), is plastically deformed to a new shape it will return to its original shape when heated to its high temperature phase (Austenite). Since the modulus of elasticity and yield stress are much higher in the Austenite phase it will not only return to its original shape, but when doing so, also produce a force much higher than required for deformation. The difference in deformation force and recovery force can be used for actuation. The original shape is "taught" to the material by forming and fixing it to the desired shape, followed by heating to a temperature much higher than any normal operational temperature. Normally a sufficient heat treatment for shape memory "teaching" is around 500° C and lasts for a few minutes. As mentioned the characteristics of SMA members change dramatically when the temperature is increased. In the materials appropriate for actuation the modulus of elasticity is normally more than doubled and the yield stress more than four times higher, when the material is heated above its transformation temperature. The changes are reversible and fully reproducible. The heating of the SMA member is conveniently done using Ohmic heating, that is by letting current pass through the material, wherein the electric resistance of the material causes a temperature increase.

There are various Shape Memory Alloys suitable for use in an embodiment of the present invention. Nitinol is an example of such a Shape memory alloy. Nitinol is a corrosion resistant, super elastic Nickel-Titanium alloy. Being super elastic, Nitinol can be stretched up to 10% without rupturing. When contracting, it can produce an actuation stress of more than 600 MPa in extreme cases, but should normally not be subjected to more than 170 MPa. Furthermore, when stretched less than 5%, Nitinol is also fatigue persistent. Required electric potential for power supply is normally a few volts. The temperature characteristics for the phase change is highly dependent on the content ratio of the alloy components. There exist in addition to various types of Nitinol also for example Fe-based and Cu-based shape memory alloys. Given the above data it is understood by a man skilled in the art of latch assemblies that the length of the SMA members is an important design tool in order to provide a long-lasting and reliable latch assembly. Referring again to Fig 1 shown is a device 15, around which the actuator 6 is arranged. By such or similar arrangements the latch assembly 1 can be made small and yet fit an appropriate actuator 6 almost irrespective of length.

Further, with reference to Fig 1, according to the preferred embodiment of the invention the latch assembly 1 has a striker 7a adapted for engagement with the claw 2 in the inner portion of the claw mouth 8. In order to receive the striker 7a the housing 11 has an engaging device 12a, preferably formed like a slot in the housing 11, in which the striker 7a can be guided in from the side. The sides of the slot can also be used to withstand forces acting on the latch mechanism in a collinear direction with the long side of the latch assembly 1. These collinear forces are not easily absorbed by the pivotal claw 2. The pivotal claw 2 gripping around the striker 7a in a locked condition primarily withstands the forces acting in the normal direction relative to the long side of the latch assembly 1 according to the preferred embodiment. In order to provide support also against external forces acting on the latch assembly in the normal direction of the pivotal plane of the latch assembly an additional engaging device 12b is provided in said housing 11, for receiving an additional striker 7b. Preferably, said engaging devices 12 comprise a slot in said housing 11, wherein said striker 7a is adapted to fit when the latch assembly is in a latched condition. The additional striker 7b is suitably fitted with a top portion adapted to bear against the housing to withstand external forces acting on the latch assembly in the normal direction relative to the pivotal plane of said latch assembly.

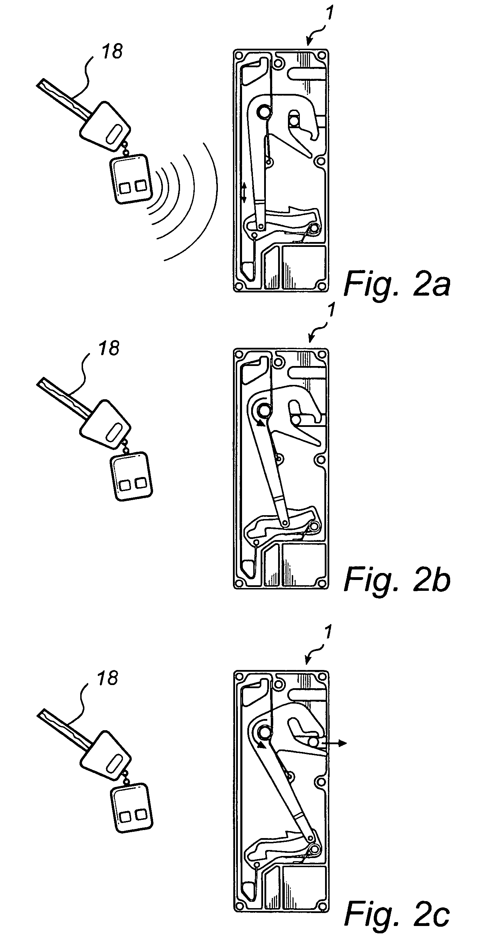

Referring now to Figs 2a-2c the function of the latch assembly will be described. In Fig 2a the latch assembly 1 is in a fully locked position. When the current is applied to the actuator 6 it shrinks due to the rise in temperature in the SMA member. This deformation generates a force as earlier described resulting in a movement of the pawl 4. The movement of the pawl 4, in turn, releases the end portion of the first leg of the claw 2 from the grip in the fully latched position. The initiated movement of the claw 2 is further guided by the assigned path in the pawl 4. During the pivotal movement of the claw, which movement is indicated by an arrow in fig 2b, the striker 7a is also released from the grip of the claw mouth 8. During this process the latch assembly becomes fully unlatched, which is shown in fig 2c. From this unlatched position a door comprising said latch assembly 1 can be closed and the latch assembly 1 can be latched by giving said door a soft swing. If not enough force is employed and in this case the door does not close entirely the safety position, half latched condition, will at least be reached. This position is essentially the same as in fig 2b. Referring again to Fig 1 the pawl 4 has a stopping device 21 adapted to stop the claw end portion in this safety position. Also the claw mouth 8 is formed to engage with the striker 7a in the corresponding safety position outlined in fig 2b. From this safety position the door can be opened and closed. The forced steering of the pawl 4 accomplished by the pawl return spring 5 and the shape of the pawl 4 makes it possible to close the door almost at once, without having to wait for any cooling of the shape memory alloy (SMA) members.

Since the latch assembly has the advantage of allowing for a fully electric system, it is understood that said actuator 6 is well equipped to be activated by a control unit 17. The latch assembly is then preferably but not necissarily fitted with a control unit 17 comprising a receiver that will react on a signal transmitted from a key or key fob 18. The locking and unlocking logic is then provided at least partly in the key or key fob 18. The control unit 17 is adapted to control whether the actuator 6 will be activated or not based on information transmitted by the signal. The signal is detected by the latch assembly 1 to unlock and lock the latch. The control unit 17 of the latch assembly is then able, when activated, to provide power from the energy source 16 to the actuator 6. The latch assembly 1 will then be operable from for exemple a latched to an unlatched condition via for example a door handle. The control unit 17 suitably has wireless connection with a key or key fob 18 and possibly a door handle or the like. Also other arrangements to lock and actuate the latch assembly 1 can be used since the inventive latch assembly 1 is not limited to any specific procedure regarding actuating the actuator 6. In a further preferred embodiment of the invention the control unit 17 comprises at least part of the locking and unlocking logic.

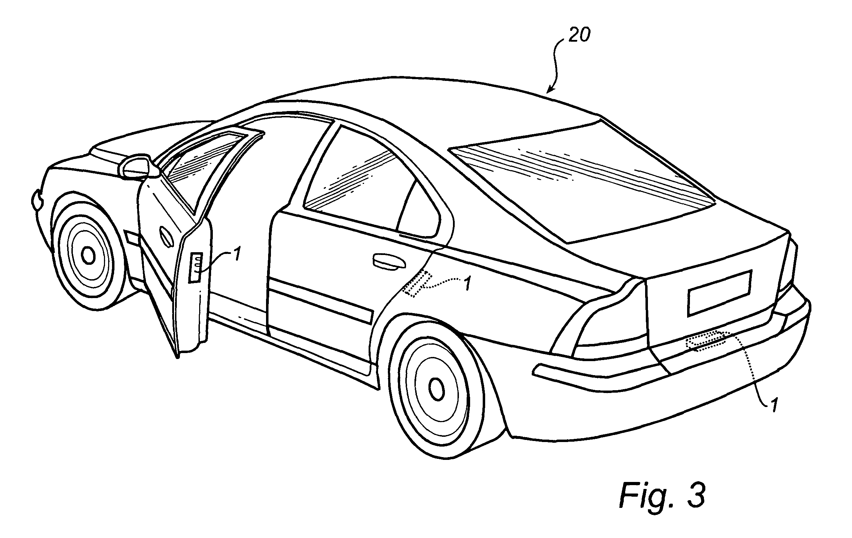

A vehicle 20 with a latch assembly 1 system according to the invention provides a vehicle with sufficient space for safety arrangements in the sides of the vehicle 20, reliable locking characteristics, and a rapid latch response time etc. A vehicle 20 appropriate for a latch assembly according to the preferred embodiment of the invention is shown in Fig 3. The latch assemblies of the vehicle are well adapted to be used as a central locking system.

The present invention should not be considered as being limited to the above-described preferred embodiment, but rather includes all possible variations covered by the scope defined by the appended claims. It is understood by a man skilled in the art that the exact shape of the components and members of the latch assembly 1 can be varied in order to achieve alternative embodiments of the invention as defined by the appended claims.

## Claims

1. A latch assembly (1) for latching and unlatching a vehicle door, said latch assembly (1) being connected to an energy source (16) and comprising,
a claw (2) pivotally mounted around a claw axle (9) to pivot between at least a latched and an unlatched condition,
a pawl (4) pivotally mounted around a pawl axle (10), wherein said claw (2) being operatively coupled to said pawl (4),
an actuator (6) operatively coupled to said pawl (4)
said actuator (6) is substantially made of shape memory alloy (SMA) and arranged to be powered by said energy source (16), wherein said claw (2) has substantially two legs starting from the claw axle (9) and running in different directions from said axle (9) with at least one end portion each, and a mouth (8) at one of said end portions for receiving and engaging a striker (7a), said claw (2) being operatively coupled to said pawl (4) at the other end portion, wherein said claw (2) substantially describes a first lever from said pawl (4) to said claw axle (9) and a second lever from a part of said mouth (8), wherein said part of said mouth (8) is intended to engage with said striker (7a) in a latched condition of said latch assembly (1), to said claw axle (9), said first and second lever having a length ratio of at least 3:1.

2. The latch assembly (1) according to claim 1, wherein said latch assembly (1) including the actuator (6) is fitted in a housing (11).

3. The latch assembly (1) according to any one of claims 1-2, wherein said actuator (6) comprises at least one member of shape memory alloy (SMA).

4. The latch assembly (1) according to claim 3, wherein said shape memory alloy member has a cross-sectional diameter of between 5µm and 5mm, preferably between 10µm and 100µm.

5. The latch assembly (1) according to any one of claims 1-4, wherein said actuator (6) of shape memory alloy (SMA) has at least one back-up member for providing additional force under extreme conditions.

6. The latch assembly (1) according to claim 5, wherein said back-up member has a cross-sectional area that is preferably between 4 and 25 times greater than a shape memory alloy member in said latch assembly (1).

7. The latch assembly (1) according to any one of claims 1-6, wherein an additional engaging device (12b) is provided in said assembly (1), for receiving an additional striker (7b), to provide support for forces in preferably the normal direction relative to a plane, in which plane said claw (2) is pivotal.

8. The latch assembly (1) according to any one of claims 1-7, wherein an energy source (16) is provided within said assembly (1).

9. The latch assembly (1) according to any one of claims 1-8, wherein said actuator (6) is arranged to be activated by a control unit (17).

10. The latch assembly (1) according to claim 9, wherein said control unit (17) is provided to be activated by a key or key fob (18).

11. The latch assembly (1) according to claim 10, wherein said key or key fob (18) comprises at least part of the locking and unlocking logic to said latch assembly (1).

12. The latch assembly (1) according to any one of claims 9-10, wherein said control unit (17) comprises at least part of the locking and unlocking logic to said latch assembly (1).

13. The latch assembly (1) according to any one of claims 10-12, wherein said key or key fob (18) has wireless connection with said control unit (17).

## Patentansprüche

1. Verriegelungsvorrichtung (1) zum Verriegeln und Entriegeln einer Fahrzeugtür, wobei die Verriegelungsvorrichtung (1) mit einer Energieversorgung (16) verbunden ist und umfasst:
eine Kralle (2), die um eine Krallenachse (9) drehbar angebracht ist, um sich zwischen mindestens einem verriegelten und einem entriegelten Zustand zu drehen,
eine Klinke (4), die um eine Klinkenachse (10) drehbar angebracht ist, wobei die Kralle (2) funktionsfähig an die Klinke (4) gekoppelt ist,
ein Betätigungsglied (6), das funktionsfähig an die Klinke (4) gekoppelt ist, wobei das Betätigungsglied (6) im Wesentlichen aus einer Formgedächtnislegierung (SMA) besteht und eingerichtet ist, durch die Energieversorgung (16) mit Energie versorgt zu werden, wobei die Kralle (2) im Wesentlichen zwei Schenkel aufweist, die von der Krallenachse (9) ausgehen und sich von der Achse (9) aus in unterschiedliche Richtungen erstrecken, mit je mindestens einem Endteil und einem Mundstück (8) an einem der Endteile zum Aufnehmen und Erfassen eines Schlagbolzens (7a), wobei die Kralle (2) funktionsfähig mit der Klinke (4) an dem anderen Endteil verbunden ist, wobei die Kralle (2) im Wesentlichen einen ersten Hebel von der Klinke (4) zur Krallenachse (9) und einen zweiten Hebel von einem Teil des Mundstücks (8) darstellt, wobei der Teil des Mundstücks (8) vorgesehen ist, in einem verriegelten Zustand der Verriegelungsvorrichtung (1) in den Schlagbolzen (7a) einzugreifen, wobei der erste und der zweite Hebel ein Längenverhältnis von mindestens 3 : 1 aufweisen.

2. Verriegelungsvorrichtung (1) nach Anspruch 1, **dadurch gekennzeichnet, dass** die Verriegelungsvorrichtung (1) einschließlich des Betätigungsgliedes (6) in ein Gehäuse (11) eingepasst ist.

3. Verriegelungsvorrichtung (1) nach einem der Ansprüche 1 - 2, **dadurch gekennzeichnet, dass** das Betätigungsglied (6) mindestens ein Bauteil aus einer Formgedächtnislegierung (SMA) umfasst.

4. Verriegelungsvorrichtung (1) nach Anspruch 3, **dadurch gekennzeichnet, dass** das Formgedächtnislegierungsbauteil einen Querschnittsdurchmesser zwischen 5 µm und 5 mm, vorzugsweise zwischen 10 µm und 100 µm, aufweist.

5. Verriegelungsvorrichtung (1) nach einem der Ansprüche 1 - 4, **dadurch gekennzeichnet, dass** das Betätigungsglied (6) aus einer Formgedächtnislegierung (SMA) mindestens ein Rückstellglied zum Bereitstellen einer zusätzlichen Kraft unter extremen Bedingungen aufweist.

6. Verriegelungsvorrichtung (1) nach Anspruch 5, **dadurch gekennzeichnet, dass** das Rückstellglied eine Querschnittsfläche aufweist, die vorzugsweise zwischen 4 und 25 mal größer ist als ein Formgedächtnislegierungsbauteil in der Verriegelungsvorrichtung (1).

7. Verriegelungsvorrichtung (1) nach einem der Ansprüche 1 - 6, **dadurch gekennzeichnet, dass** in der Vorrichtung (1) eine zusätzliche Einrastvorrichtung (12b) zur Aufnahme eines zusätzlichen Schlagbolzens (7b) vorgesehen ist, um eine Abstützung für die Kräfte vorzugsweise in der Normalenrichtung bezüglich einer Ebene bereitzustellen, in der die Kralle (2) drehbar ist.

8. Verriegelungsvorrichtung (1) nach einem der Ansprüche 1 - 7, **dadurch gekennzeichnet, dass** in der Vorrichtung (1) eine Energieversorgung (16) vorgesehen ist.

9. Verriegelungsvorrichtung (1) nach einem der Ansprüche 1 - 8, **dadurch gekennzeichnet, dass** das Betätigungsglied (6) eingerichtet ist, durch eine Steuereinheit (17) aktiviert zu werden.

10. Verriegelungsvorrichtung (1) nach Anspruch 9, **dadurch gekennzeichnet, dass** die Steuereinheit (17) vorgesehen ist, durch einen Schlüssel oder eine Schlüsselkarte (18) aktiviert zu werden.

11. Verriegelungsvorrichtung (1) nach Anspruch 10, **dadurch gekennzeichnet, dass** der Schlüssel oder die Schlüsselkarte (18) mindestens einen Teil der Verriegelungs- und Entriegelungslogik der Verriegelungsvorrichtung (1) umfasst.

12. Verriegelungsvorrichtung (1) nach einem der Ansprüche 9 - 10, **dadurch gekennzeichnet, dass** die Steuereinheit (17) mindestens einen Teil der Verriegelungs- und Entriegelungslogik der Verriegelungsvorrichtung (1) umfasst.

13. Verriegelungsvorrichtung (1) nach einem der Ansprüche 10 - 12, **dadurch gekennzeichnet, dass** der Schlüssel oder die Schlüsselkarte (18) eine drahtlose Verbindung mit der Steuereinheit (17) aufweist.

## Revendications

1. Dispositif de verrouillage (1) pour verrouiller et déverrouiller une portière de véhicule, ledit dispositif de verrouillage (1) étant relié à une source d'énergie (16) et comprenant
un crabot (2) monté de façon pivotante autour d'un axe de crabot (9) afin de pivoter entre au moins un état verrouillé et un état non verrouillé,
un rochet (4) monté de façon pivotante autour d'un axe de rochet (10), dans lequel ledit crabot (2) est couplé opérationnellement audit rochet (4),
un actionneur (6) couplé fonctionnellement audit rochet (4), ledit actionneur (6) est essentiellement fait d'alliage à mémoire de forme (AMF) et disposé de sorte à être alimenté en énergie par ladite source d'énergie (16), dans lequel ledit crabot (2) comporte essentiellement deux pattes partant de l'axe de crabot (9) et se prolongeant dans différentes directions depuis ledit axe (9) avec au moins une partie d'extrémité chacune, et un trou (8) en une desdites parties d'extrémité pour recevoir et engager un percuteur (7a), ledit crabot (2) étant couplé fonctionnellement audit rochet (4) en l'autre partie d'extrémité, dans lequel ledit crabot (2) décrit essentiellement un premier levier depuis ledit rochet (4) jusqu'audit axe de crabot (9) et un second levier depuis une partie dudit trou (8), dans lequel ladite partie dudit trou (8) est destinée à s'engager avec ledit percuteur (7a) dans un état verrouillé dudit dispositif de verrouillage (1), jusqu'audit axe de crabot (9), lesdits premier et second leviers ayant un rapport de longueurs d'au moins 3:1.

2. Dispositif de verrouillage (1) selon la revendication 1, dans lequel ledit dispositif de verrouillage (1), y compris l'actionneur (6) est adapté dans un carter (11).

3. Dispositif de verrouillage (1) selon la revendication 1 ou 2, dans lequel ledit actionneur (6) comprend au moins un élément d'alliage à mémoire de forme (AMF).

4. Dispositif de verrouillage (1) selon la revendication 3, dans lequel ledit élément d'alliage à mémoire de forme a un diamètre de section transversale entre 5 µm et 5 mm, de préférence entre 10 µm et 100 µm.

5. Dispositif de verrouillage (1) selon l'une quelconque des revendications 1 à 4, dans lequel ledit actionneur (6) en élément à mémoire de forme (AMF) a au moins un élément de secours pour fournir une force supplémentaire dans des conditions extrêmes.

6. Dispositif de verrouillage (1) selon la revendication 5, dans lequel ledit élément de secours a une aire de section transversale qui est de préférence entre 4 fois et 25 fois supérieure à l'élément d'alliage à mémoire de forme dans ledit dispositif de verrouillage (1).

7. Dispositif de verrouillage (1) selon l'une quelconque des revendications 1 à 6, dans lequel un dispositif d'engagement supplémentaire (12b) est installé dans ledit dispositif (1) pour recevoir un percuteur supplémentaire (7b), afin de fournir un soutien pour des forces suivant, de préférence, la direction normale par rapport à un plan, plan dans lequel ledit crabot (2) pivote.

8. Dispositif de verrouillage (1) selon l'une quelconque des revendications 1 à 7, dans lequel une source d'énergie (16) est fournie à l'intérieur dudit dispositif (1).

9. Dispositif de verrouillage (1) selon l'une quelconque des revendications 1 à 8, dans lequel ledit actionneur (8) est configuré pour être activé par une unité de commande (17).

10. Dispositif de verrouillage (1) selon la revendication 9, dans lequel ladite unité de commande (8) est fournie pour être activée par une clé ou une breloque de clés (18).

11. Dispositif de verrouillage (1) selon la revendication 10, dans lequel ladite clé ou breloque de clés (18) comprend au moins une partie de la logique de verrouillage et de déverrouillage pour ledit dispositif de verrouillage (1).

12. Dispositif de verrouillage (1) selon l'une quelconque des revendications 9 ou 10, dans lequel ladite unité de commande (17) comprend au moins une partie de la logique de verrouillage et de déverrouillage pour ledit dispositif de verrouillage (1).

13. Dispositif de verrouillage (1) selon l'une quelconque des revendications 10 à 12, dans lequel ladite clé ou breloque de clés (18) a une connexion sans fil avec ladite unité de commande (17).
